# EUROPEAN PATENT APPLICATION

(11) **EP 4 528 433 A1**
(43) Date of publication of application: **26.03.2025**
(21) Application number: 23822756.5
(22) Date of filing: 11.04.2023
(51) Int. Cl.: G06F 3/01

(54) **HUMAN-COMPUTER INTERACTION METHOD AND APPARATUS**

(30) Priority: 14.06.2022 CN 202210671323
(71) Applicant: Shenzhen Yinwang Intelligent Technologies Co., Ltd., Shenzhen, Guangdong 518129 (CN)
(72) Inventor: SUN, Qi, Shenzhen, Guangdong 518129 (CN); WEN, Mingjian, Shenzhen, Guangdong 518129 (CN)
(74) Representative: Thun, Clemens
(86) International application number: PCT/CN2023/087435
(87) International publication number: WO 2023/241185

(57) **Abstract**

This application relates to the field of intelligent vehicle technologies, and in particular, to a human-computer interaction method. Steps of the method include: first obtaining a driving status of a vehicle; pushing a to-be-displayed vehicle function when the driving status meets a vehicle function push condition; when receiving a user indication for displaying the vehicle function, obtaining a function parameter and an environment parameter that are needed for executing the vehicle function; and then, performing real-vehicle interactive display or simulated interactive display of the vehicle function based on the function parameter and the environment parameter. **In** this way, a user experiences the vehicle function through an actual operation under interactive guidance of the vehicle function.

## Description

### TECHNICAL FIELD

This application relates to the field of intelligent vehicle technologies, and in particular, to a human-computer interaction method, a human-computer interaction apparatus, an electronic apparatus, a computer-readable storage medium, and a computer program product.

### BACKGROUND

With rapid development of the vehicle industry, there are an increasingly large number of functional configurations on vehicles in recent years. Smart vehicles are used as an example. An increasingly large number of vehicle enterprises are using intelligent functions as selling points to attract consumers.

From the perspective of safety, how to use many intelligent functions needs to be known in advance. For example, before using an assisted driving function, users need to know, in advance, how to use the function and a condition for using the function, so that the function can be correctly used.

Currently, the vehicle enterprises usually provide printed or electronic vehicle owner's manuals, to describe, in detail, how to use vehicle functions. However, the current owner's manuals are mainly presented in a form of text, video, or voice. Such one-way information transmission lacks interaction with manipulation behaviors of the users. Even if a vehicle owner has learned the owner's manual, there is still a possibility of misoperations without hands-on experience. Therefore, there are specific safety hazards.

In addition, with the help of an over-the-air (Over-the-Air, OTA) technology of a vehicle, the vehicle can obtain new functions through downloading. With an increasingly large number of downloadable functions of the vehicle, many highlight functions may not be widely known and used by the users. Even if introductions of these functions are pushed to the users, when the users have not experienced actual use effect of these functions, it is difficult for the users to develop a habit of using these functions, and consequently, promotion effect of these functions is worse than expected.

### SUMMARY

This application provides a human-computer interaction solution. The solution includes a human-computer interaction method, a human-computer interaction apparatus, an electronic apparatus, a computer-readable storage medium, and a computer program product, to implement interactive display of a vehicle function.

A first aspect of this application provides a human-computer interaction method to achieve the foregoing objectives. The method includes: obtaining a driving status of a vehicle; pushing a to-be-displayed vehicle function when the driving status meets a vehicle function push condition; when receiving a user indication for displaying the vehicle function, obtaining a function parameter and an environment parameter that are needed for executing the vehicle function; and performing real-vehicle interactive display or simulated interactive display of the vehicle function based on the function parameter and the environment parameter.

It can be learned from the foregoing description that, the vehicle interacts with a user through guidance, and the user experiences the vehicle function through an actual operation, so that the user has real experience of the pushed vehicle function. This can enhance understanding of the vehicle function, and is also conducive to promotion of the vehicle function. In addition, on a premise of driving safety, the real-vehicle interactive display or simulated interactive display of the vehicle function may be performed based on the function parameter and the environment parameter, so that the driving safety can be ensured when the user experiences the vehicle function through an actual operation.

In a possible implementation of the first aspect, the vehicle function push condition includes: the vehicle is in a parked state.

It can be learned from the foregoing description that, the vehicle function push condition may be preset, and the to-be-displayed vehicle function is pushed when the driving status of the vehicle meets the vehicle function push condition. The vehicle function push condition may be set from the perspective of safety. For example, the push condition may be: pushing of the vehicle function does not affect or has minimal impact on driving of the vehicle by a driver. When the push condition is that the vehicle is in the parked state, the vehicle is in a non-traveling state, and triggering pushing of the vehicle function does not affect safety of the vehicle.

In a possible implementation of the first aspect, the performing real-vehicle interactive display or simulated interactive display of the vehicle function based on the function parameter and the environment parameter includes: performing the real-vehicle interactive display of the vehicle function when the function parameter does not include a parameter for performing a driving operation by the vehicle.

The performed driving operation includes an operation that changes the driving status of the vehicle, such as operating a steering mechanism, a power mechanism, a braking mechanism, or a gear. When the function parameter does not include the parameter for performing the driving operation by the vehicle, it usually indicates that execution of the vehicle function basically does not affect a current driving status (such as a parked state or an autonomous driving state) of the vehicle. Therefore, the execution of the vehicle function basically does not affect driving safety. In this case, the vehicle function may be displayed through the real-vehicle interactive display. In other words, the user performs an actual operation, and the vehicle executes the vehicle function in response to the operation of the user, so that the user has real experience of the vehicle function.

In a possible implementation of the first aspect, the performing real-vehicle interactive display or simulated interactive display of the vehicle function based on the function parameter and the environment parameter includes: performing the real-vehicle interactive display of the vehicle function when the function parameter includes a parameter for performing a driving operation by the vehicle and the environment parameter meets a safety condition for executing the vehicle function.

It can be learned from the foregoing description that, the real-vehicle interactive display of the vehicle function is performed when executing the vehicle function requires the driving operation and the environment parameter meets the safety condition, so that the user can have real experience of the vehicle function on a premise of driving safety.

In a possible implementation of the first aspect, the performing real-vehicle interactive display or simulated interactive display of the vehicle function based on the function parameter and the environment parameter includes: performing the simulated interactive display of the vehicle function when the function parameter includes a parameter for performing a driving operation by the vehicle and the environment parameter does not meet a safety condition for executing the vehicle function.

It can be learned from the foregoing description that, based on a premise of driving safety, the simulated interactive display is used when the real-vehicle interactive display is not suitable, so that the user can also understand the vehicle function through an actual operation, thereby improving learning experience of using the vehicle function, and ensuring driving safety in a display process of the vehicle function.

In a possible implementation of the first aspect, the method further includes: when receiving the user indication for displaying the vehicle function, obtaining program code needed for executing the vehicle function; and loading the program code.

It can be learned from the foregoing description that, storage space and system resources of a vehicle system can be saved.

In a possible implementation of the first aspect, the pushing a to-be-displayed vehicle function includes: pushing the to-be-displayed vehicle function according to a push policy.

The push policy herein is used to determine which vehicle function is to be pushed. For example, a vehicle function that is less frequently used by the user may be preferentially displayed according to the push policy, so that the user gets familiar with how to use the function, thereby reducing misoperations and ensuring driving safety. Alternatively, an advanced vehicle function or a unique new function may be preferentially displayed according to the push policy, so that the user can experience use effect of the advanced new function. This better guides the user to develop a use habit, thereby achieving desired function promotion effect. The push policy can be flexibly customized as required.

In a possible implementation of the first aspect, the pushing the to-be-displayed vehicle function according to a push policy includes one or two of the following: pushing the vehicle function when a quantity of times the vehicle function is pushed is less than a preset value; and pushing the vehicle function when a quantity of times the vehicle function is executed is less than a preset value.

Such a push policy considers that if a vehicle function is pushed a relatively small quantity of times, it is difficult for the user to fully understand how to use the function. Similarly, if a vehicle function is executed a relatively small quantity of times, the user may not be familiar with how to use the function. Therefore, a vehicle function with a relatively small quantity of push times and/or a relatively small quantity of execution times may be preferentially displayed according to the push policy, so that the user gets familiar with how to use the function as soon as possible.

In a possible implementation of the first aspect, the pushing the to-be-displayed vehicle function according to a push policy includes: pushing the vehicle function when the vehicle function meets a use condition before parking of the vehicle and the vehicle function is not used.

Such a push policy considers that, when a vehicle function meets the use condition before parking but is not used, a possible case is that the user does not know existence of the vehicle function or does not know how to use the function, and therefore the vehicle function is pushed. It can be learned that the vehicle function pushed according to this push policy is more targeted, and better meets a potential vehicle function requirement of the user.

A second aspect of this application provides a human-computer interaction apparatus, including: an obtaining module, configured to obtain a driving status of a vehicle; a push module, configured to push a to-be-displayed vehicle function when the driving status meets a vehicle function push condition, where the obtaining module is further configured to: when receiving a user indication for displaying the vehicle function, obtain a function parameter and an environment parameter that are needed for executing the vehicle function; and a display module, configured to perform real-vehicle interactive display or simulated interactive display of the vehicle function based on the function parameter and the environment parameter.

It can be learned from the foregoing description that, the human-computer interaction apparatus interacts with a user through guidance, and the user experiences the vehicle function through an actual operation, so that the user has real experience of the pushed vehicle function. This can enhance understanding of the vehicle function, and is also conducive to promotion of the vehicle function. In addition, on a premise of driving safety, the real-vehicle interactive display or simulated interactive display of the vehicle function may be performed based on the function parameter and the environment parameter, so that the driving safety can be ensured when the user experiences the vehicle function through an actual operation.

In a possible implementation of the second aspect, the vehicle function push condition includes: the vehicle is in a parked state.

In a possible implementation of the second aspect, the display module is configured to: perform real-vehicle interactive display of the vehicle function when the function parameter does not include a parameter for performing a driving operation by the vehicle.

In a possible implementation of the second aspect, the display module is configured to: perform the real-vehicle interactive display of the vehicle function when the function parameter includes a parameter for performing a driving operation by the vehicle and the environment parameter meets a safety condition for executing the vehicle function.

In a possible implementation of the second aspect, the display module is configured to: perform the simulated interactive display of the vehicle function when the function parameter includes a parameter for performing a driving operation by the vehicle and the environment parameter does not meet a safety condition for executing the vehicle function.

In a possible implementation of the second aspect, the apparatus further includes a loading module. The loading module is configured to: when receiving the user indication for displaying the vehicle function, obtain program code needed for executing the vehicle function, and load the program code.

In a possible implementation of the second aspect, the push module is further configured to push the to-be-displayed vehicle function according to a push policy.

In a possible implementation of the second aspect, when the push module pushes the to-be-displayed vehicle function according to the push policy, one or two of the following operations are included: pushing the vehicle function when a quantity of times the vehicle function is pushed is less than a preset value; and pushing the vehicle function when a quantity of times the vehicle function is executed is less than a preset value.

In a possible implementation of the second aspect, the push module is configured to: push the vehicle function when the vehicle function meets a use condition before parking of the vehicle and the vehicle function is not used.

A third aspect of this application provides an electronic apparatus, including a processor and a memory. The memory stores program instructions, and when the program instructions are executed by the processor, the processor is enabled to perform the human-computer interaction method according to any one of the first aspect.

A fourth aspect of this application provides an electronic apparatus, including a processor and an interface circuit. The processor accesses a memory through the interface circuit. The memory stores program instructions, and when the program instructions are executed by the processor, the processor is enabled to perform the human-computer interaction method according to any one of the first aspect.

A fifth aspect of this application provides a computer-readable storage medium. The computer-readable storage medium stores program instructions. When the program instructions are executed by a computer, the computer is enabled to perform the human-computer interaction method according to any one of the first aspect.

A sixth aspect of this application provides a computer program product. The computer program product includes program instructions. When the program instructions are executed by a computer, the computer is enabled to perform the human-computer interaction method according to any one of the first aspect.

A seventh aspect of this application provides a vehicle, including the electronic apparatus provided in the third aspect, or the electronic apparatus provided in the fourth aspect, or the computer-readable storage medium provided in the fifth aspect.

In conclusion, in the human-computer interaction solution of this application, the vehicle function is displayed through real-vehicle interactive display or simulated interactive display, so that the user can obtain actual operation experience of the vehicle function based on a real-vehicle operation under guided interaction. This not only helps the user correctly use or quickly master the pushed vehicle function, but also facilitates promotion of the vehicle function. Further, whether execution of the vehicle function is related to the driving operation is determined based on the function parameter of the vehicle function, to preliminarily determine whether the execution of the vehicle function is safe. In addition, when the driving operation is related, whether the execution of the vehicle function is safe may be determined with reference to a surrounding environment parameter. When the execution of the vehicle function is safe, the real-vehicle interactive display is used; otherwise, the simulated interactive display is used, to ensure safety of the real-vehicle operation of the user.

The human-computer interaction method provided in embodiments of this application is widely applied to various scenarios. For example, in a scenario such as a vehicle selling phase, an exhibition hall, or an auto show, when a vehicle is parked, the human-computer interaction method provided in embodiments of this application is used to send feedback information to a user through real-vehicle interactive display or simulated interactive display, to create immersive driving experience, so that a consumer deeply understands use effect of a function. For another example, in a daily driving phase, the human-computer interaction method provided in embodiments of this application is used, so that a user may be guided to perform a real-vehicle operation, and feedback information is sent to the user through real-vehicle interactive display or simulated interactive display, allowing a consumer to understand a vehicle function and develop a habit of using the function.

### BRIEF DESCRIPTION OF DRAWINGS

FIG. 1 is diagram of a human-computer interaction method applied to a vehicle according to an embodiment of this application;
FIG. 2 is a flowchart of a human-computer interaction method according to an embodiment of this application;
FIG. 3A is a diagram of a system architecture for implementing a human-computer interaction method according to an embodiment of this application;
FIG. 3B is diagram of a working principle of a system architecture for implementing a human-computer interaction method according to an embodiment of this application;
FIG. 4A-1 and FIG. 4A-2 are a flowchart of a human-computer interaction method applied to display of an automatic parking function according to an embodiment of this application;

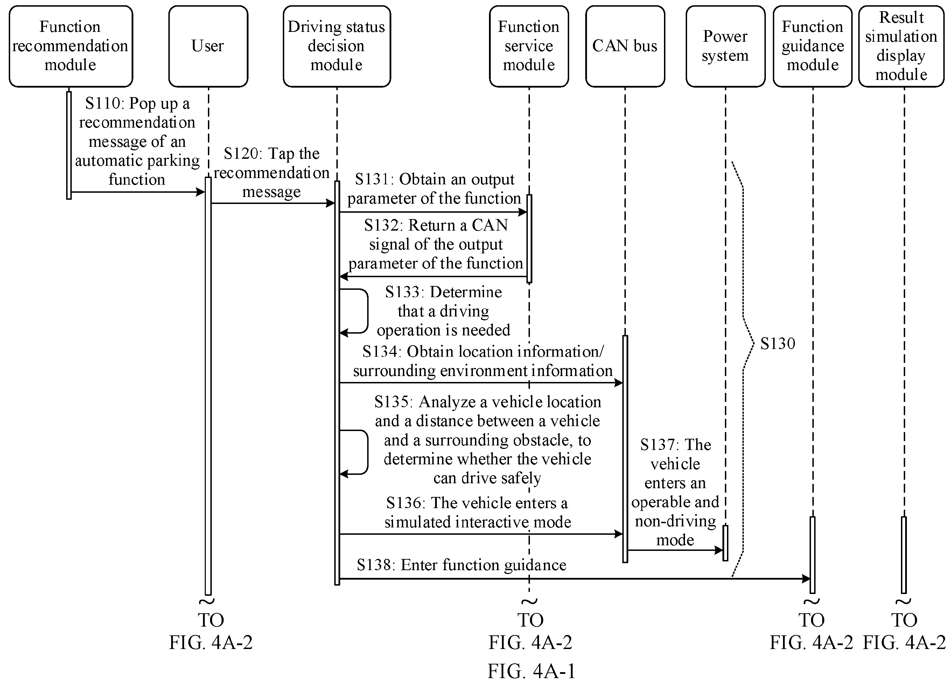

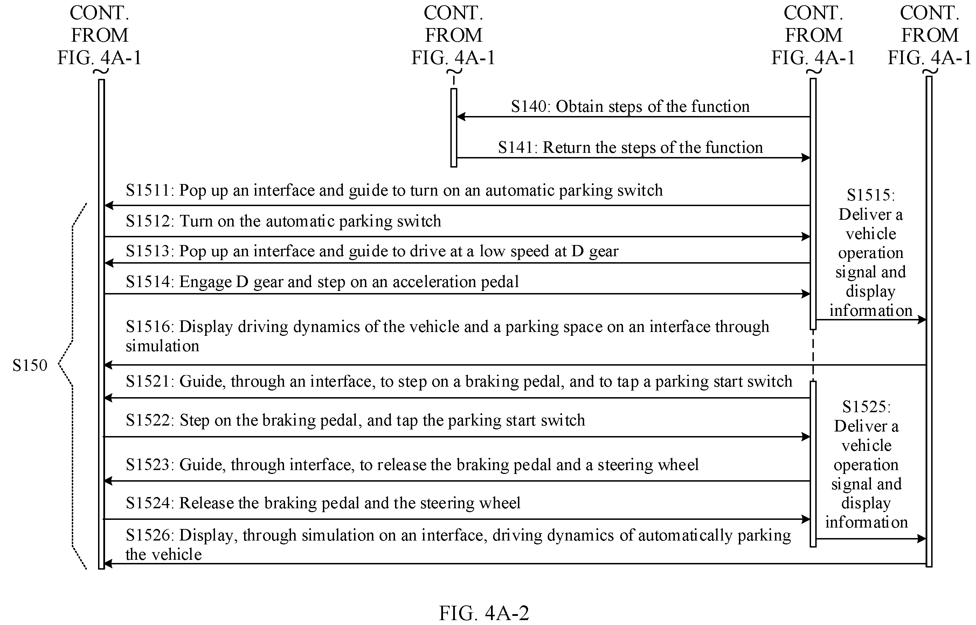

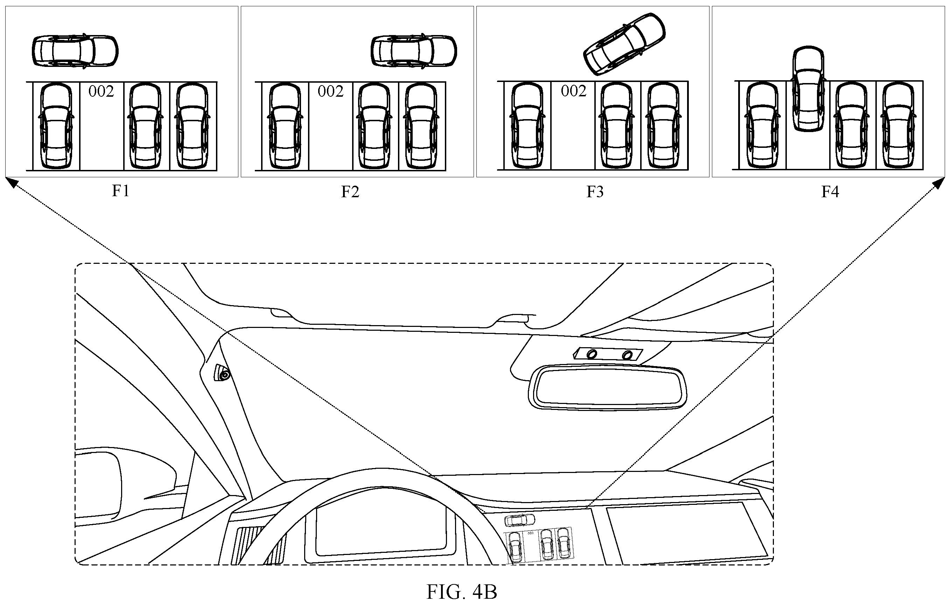

FIG. 4B is a diagram of a dynamic process of displaying automatic parking of a vehicle through simulation according to an embodiment of this application;

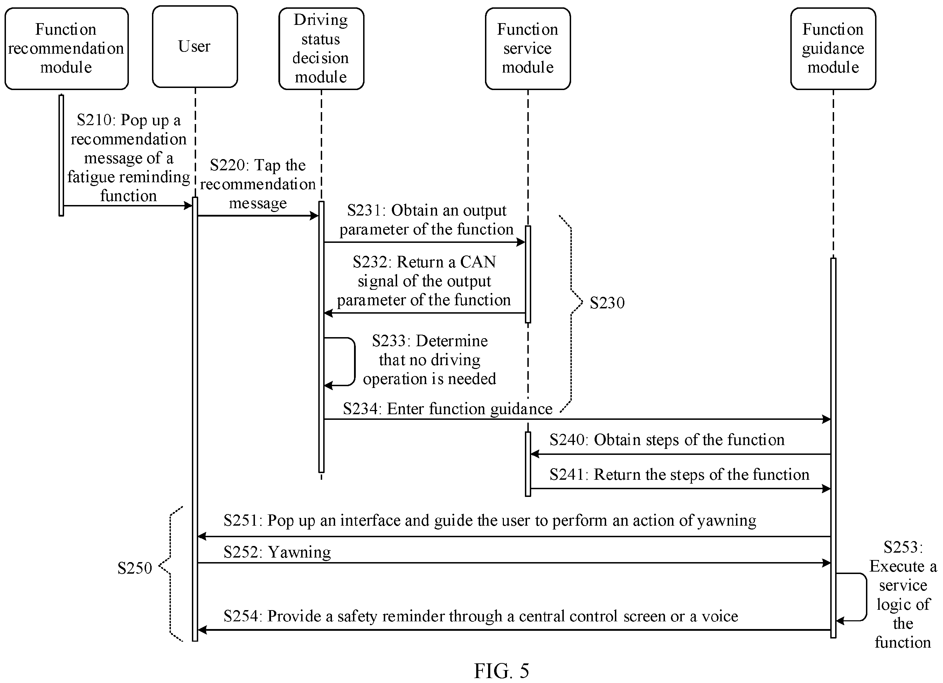

FIG. 5 is a flowchart of a human-computer interaction method applied to display of a fatigue reminding function according to an embodiment of this application;

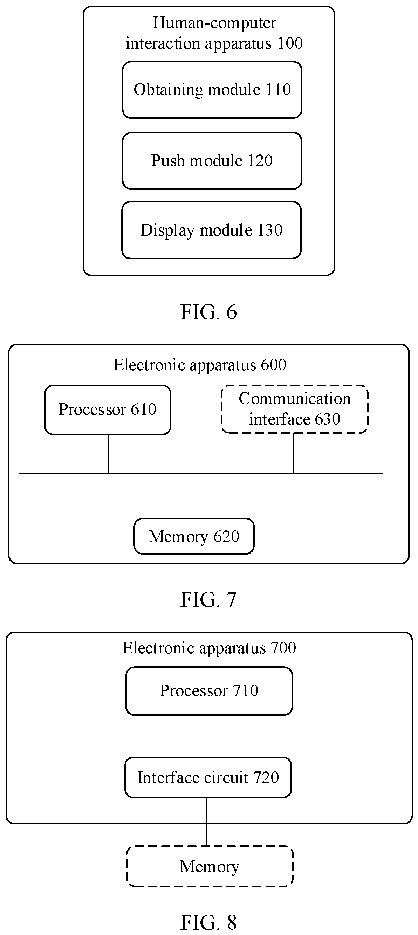

FIG. 6 is a diagram of a human-computer interaction apparatus according to an embodiment of this application;
FIG. 7 is a diagram of an electronic apparatus according to an embodiment of this application; and
FIG. 8 is a diagram of another electronic apparatus according to an embodiment of this application.

It should be understood that, in the foregoing diagrams of structures, sizes and forms of block diagrams are merely for reference, and shall not constitute an exclusive interpretation for embodiments of this application. A relative position and an inclusion relationship between the block diagrams presented in the diagrams of structures merely schematically indicate a structural association between the block diagrams, but do not limit a physical connection manner in embodiments of this application.

### DESCRIPTION OF EMBODIMENTS

The following further describes the technical solutions provided in this application with reference to the accompanying drawings and embodiments. It should be understood that a system structure and a service scenario provided in embodiments of this application are mainly used to describe possible implementations of the technical solutions of this application, and should not be construed as a unique limitation on the technical solutions of this application. A person of ordinary skill in the art may learn that, with evolution of the system structure and emergence of a new service scenario, the technical solutions provided in this application are also applicable to a similar technical problem.

It should be understood that a human-computer interaction solution provided in embodiments of this application includes a human-computer interaction method and apparatus, a computer-readable storage medium, and a computer program product. Because problem-resolving principles of these technical solutions are the same or similar, in descriptions of the following specific embodiments, some repeated parts may not be described again, but it should be considered that these specific embodiments are mutually referenced and may be combined.

Although vehicle owner's manuals provided by vehicle enterprises describe, in detail, how to use vehicle functions, such one-way information transmission lacks interaction with manipulation behaviors of users. Even if the users have learned the owner's manuals but do not experience actual operations, it is difficult for the users to understand actual functions. In addition, many vehicle functions are not widely known and used by the users. Even if introductions of these functions are pushed to the users, when the users have not experienced actual use effect of these functions, it is difficult for the users to develop a habit of using these functions.

Based on the foregoing problems, an embodiment of this application provides a human-computer interaction method, so that a user obtains actual operation experience corresponding to a vehicle function by performing real-vehicle interactive display or simulated interactive display on the vehicle function, and a limitation of one-way information transmission is overcome by interaction between a vehicle and a manipulation behavior of the user. The real-vehicle interactive display means that a vehicle executes a vehicle function in response to a series of operations performed by a user on the specific vehicle function. For example, the vehicle executes an automatic parking function in response to a series of operations performed by the user on the automatic parking function. The simulated interactive display means that a vehicle does not execute a vehicle function in response to a series of operations performed by a user on the specific vehicle function, but displays, through multimedia provided by the vehicle, a status of the vehicle function when the vehicle function is executed. The multimedia includes a video, a picture, audio, or the like. The series of operations on the specific vehicle function are a plurality of operation behaviors of the user needed for implementing the vehicle function. In this application, the vehicle prompts the user with the series of operations through guidance, that is, through interaction. The vehicle function is displayed by using the human-computer interaction method in embodiments of this application, so that the user can experience the vehicle function based on interaction with the vehicle through an actual operation. Because the user has real experience of the pushed vehicle function, promotion effect of the vehicle function can be improved.

The human-computer interaction method provided in embodiments of this application may be applied to a vehicle, an intelligent cockpit of a vehicle, or a vehicle-mounted apparatus. The vehicle herein refers to a means of transportation in a broad sense, including a means of land transportation, a means of water transportation, and a means of air transportation. The means of land transportation may include a truck, a household car, an off-road vehicle, and the like in terms of vehicle type, or may include a fuel (such as gasoline, diesel, natural gas, and hydrogen) vehicle, an electric vehicle, a hybrid vehicle, and the like in terms of power. The means of water transportation includes a water vehicle (such as various ships), an underwater vehicle (such as a submarine and a dunker) and the like. The means of air transportation includes an aircraft, a spacecraft, and a manned spacecraft, and the like. For ease of description, unless otherwise specified, a vehicle in the following embodiments may be understood as a means of transportation in a narrow sense, that is, the means of land transportation. Certainly, the following embodiments are also applicable to a vehicle in a broad sense, and details are not described herein.

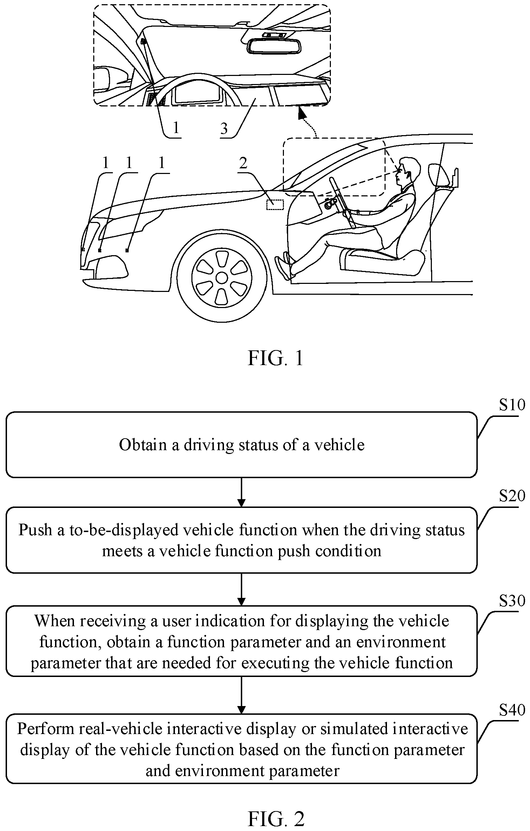

FIG. 1 is a diagram of a scenario of a human-computer interaction solution applied to a vehicle according to an embodiment of this application. The upper figure in FIG. 1 is a diagram of a cockpit in a field of view of a user (the user herein is a driver). In this application scenario, the vehicle includes a plurality of sensors 1 (only some sensors are shown as an example in FIG. 1). Information collected by the sensor 1 includes information about obstacle outside the vehicle, user image or sound information, vehicle speed information, gear information, stroke information of an acceleration pedal or a braking pedal, positioning information, and the like. The vehicle is further provided with a vehicle-mounted apparatus 2. The vehicle-mounted apparatus 2 may be an in-vehicle infotainment, an on-board computer, an in-vehicle chip, or the like. The vehicle is further provided with a central control screen 3. The central control screen 3 may be a part of the vehicle-mounted apparatus 2 (for example, when the vehicle-mounted apparatus is an in-vehicle infotainment, the central control screen is a part of the vehicle-mounted apparatus), or may be independent of the vehicle-mounted apparatus 2 (for example, when the vehicle-mounted apparatus is an on-board computer or an in-vehicle chip, the central control screen is independent of the vehicle-mounted apparatus). The vehicle-mounted apparatus 2 may be configured to perform the human-computer interaction method provided in this embodiment of this application. For example, the vehicle-mounted apparatus 2 may determine a driving status, a surrounding environment, and the like of the vehicle based on the information collected by the sensor 1, push a vehicle function, perform real-vehicle interactive display or simulated interactive display, and implement human-computer interaction in an interaction process or simulation display in the simulated interactive display through the central control screen 3. For details, refer to an embodiment corresponding to FIG. 2 and each optional embodiment thereof.

With reference to a flowchart shown in FIG. 2, the following describes in detail the human-computer interaction method provided in this embodiment of this application by using an example in which a human-computer interaction solution of this application is applied to a vehicle scenario. In this embodiment, the human-computer interaction method is performed by a vehicle-mounted apparatus of a vehicle. As shown in FIG. 2, the method may include the following steps S10 to S40.

Step S10: Obtain a driving status of the vehicle.

In this embodiment, the driving status of the vehicle includes a parked state and a driving state. The parked state includes: a parking brake is in an operating state, or in some embodiments, may include: a driving brake is in an operating state. The driving state includes a controlled driving state under operation of a driver, or an autonomous driving state under control of a vehicle.

In some embodiments, the driving status of the vehicle may be further classified. The following lists several classification examples. For example, parked states may be classified into parked states in different phases, for example, a parked state before a vehicle is started, a parked state in a startup phase, and a parked state after a driving state of a vehicle. For another example, parked states or driving states may be classified into parked states or driving states in different scenarios based on maps, positioning information, vehicle speed information, or the like, for example, a parked state at a parking lot, a parked state at a traffic intersection (for example, a crossroad at which a traffic indicator is red, and a driving brake is in an operating state), an autonomous driving state on a highway, and a slow driving state at a parking lot.

In this embodiment, the driving status of the vehicle may be used to subsequently determine whether to trigger pushing of a vehicle function. In some embodiments, the driving status of the vehicle may be further used as one of conditions for selecting a to-be-pushed vehicle function. For example, that the vehicle is in the parked state in the startup phase may be used as one of conditions for pushing a navigation function. For another example, that the vehicle is in the slow driving state at the parking lot may be used as one of conditions for pushing an automatic parking function. For another example, that the vehicle is in the autonomous driving state on a highway may be used as one of conditions for pushing a fatigue reminding function.

In some embodiments, the driving status of the vehicle may be determined based on information obtained by one or more sensors of the vehicle. The information obtained by the sensors includes, for example, brake (a parking brake or a driving brake) status information, gear information, vehicle speed information, positioning information, stroke information of an acceleration pedal or a braking pedal, rotational speed information of an engine or a power motor, and enable status information of an autonomous driving function.

Step S20: Push a to-be-displayed vehicle function when the driving status meets a vehicle function push condition.

In this embodiment, one of principles of the vehicle function push condition is to preferentially ensure driving safety of the vehicle. In view of this, the push condition may be that pushing of the vehicle function does not affect or has minimal impact on driving of the vehicle by the driver. The following uses an example to describe the push condition.

In some embodiments, the vehicle function push condition may include a case in which the vehicle is in the parked state, that is, the vehicle is in a non-traveling state. In this case, because the vehicle is in the parked state, triggering the pushing of the vehicle function does not affect safety of the vehicle. The parked state may be of one of a plurality of types, for example, a parked state when the vehicle is at a parking lot or a specific building (for example, a vehicle sales hall), a parked state before the vehicle is started, and a parked state in a startup phase that are determined based on the positioning information.

In some embodiments, the vehicle function push condition may further include a case in which the vehicle is in the autonomous driving state. In this case, because the vehicle is in the autonomous driving state, the user does not participate in driving of the vehicle, and triggering the pushing of the vehicle function basically does not affect the safety of the vehicle.

In some embodiments, when a vehicle function is pushed in the autonomous driving state of the vehicle, only a vehicle function not related to a driving operation may be pushed to ensure driving safety. For example, a function like an automobile air-condition or vehicle-mounted entertainment may be pushed and displayed. The vehicle function not related to the driving operation herein refers to a vehicle function not related to an operation that relates to acceleration, braking, or changing a driving direction. Alternatively, in the autonomous driving state, a vehicle function may be displayed through simulated interactive display to ensure driving safety.

In addition to the driving status of the vehicle, the vehicle function push condition may be further related to a specific scenario. The specific scenario may correspond to a specific vehicle function that can be displayed. For example, the automatic parking function may be pushed in a scenario in which it is determined that, based on the positioning information and track information of the vehicle, the vehicle has attempted to park in a parking space a plurality of times but has failed. For another example, in the foregoing scenario in which the vehicle is parked in the vehicle sales hall, any vehicle function that a user (namely, a potential buyer) is expected to know may be pushed.

In some embodiments, in addition to the driving status of the vehicle, the vehicle function push condition may be related to a recognized driver. For example, one of vehicle function push conditions may be set to be related to accumulated duration or a quantity of accumulated times of driving the vehicle by the recognized driver. When the accumulated duration or the quantity of accumulated times is less than specified accumulated duration or a quantity of accumulated times, it may be considered that the driver does not fully understand each vehicle function, and the vehicle function is pushed. The driver may be recognized through a fingerprint (for example, a vehicle for which one-click startup by a fingerprint is configured), a face, a voiceprint, or the like.

Step S30: When receiving a user indication for displaying the vehicle function, obtain a function parameter and an environment parameter that are related to execution of the vehicle function.

In some embodiments, a voice indication of the user may be received through a microphone in an intelligent cockpit, or a posture indication of the user may be received by using an image capturing apparatus in an intelligent cockpit, for example, a head shake or nod, or a gesture, or an operation indication of the user may be received through a touchscreen or a button that is provided by a human-computer interface in an intelligent cockpit.

In some embodiments, the function parameter related to the execution of the vehicle function includes an input parameter or an output parameter that is needed for executing the vehicle function. Different vehicle functions are related to different function parameters. For example, an input parameter related to the fatigue reminding function includes a facial image/video data of the driver. For another example, an input parameter related to the automatic parking function includes a posture of an ego vehicle, a location of the ego vehicle, and the like. An output parameter related to the automatic parking function includes a control parameter of a steering mechanism, a control parameter of a power mechanism, a control parameter of a braking mechanism, and the like.

In some embodiments, the environment parameter may include a parameter around the vehicle that can be collected by the sensor of the vehicle, for example, a distance from a surrounding vehicle, a parking space mark line, a lane line, a traffic sign, and weather information.

In some embodiments, the function parameter and the environment parameter that are related to implementation of the vehicle function may be defined in configuration information corresponding to the vehicle function. Specific data of the function parameter and the environment parameter may be obtained based on the sensor of the vehicle.

Step S40: Perform real-vehicle interactive display or the simulated interactive display of the vehicle function based on the obtained function parameter and environment parameter that are related to the vehicle function of the vehicle.

When the real-vehicle interactive display or the simulated interactive display of the vehicle function is performed, whether driving safety is affected may be used as one of conditions for performing the real-vehicle interactive display or the simulated interactive display. For example, whether the vehicle function is related to the driving operation of the vehicle may be determined based on the function parameter, or when the driving operation of the vehicle is related, whether a surrounding environment in which the vehicle function is executed is safe is determined based on the environment parameter. In this way, it is determined whether to perform real-vehicle interactive display or simulated interactive display of the vehicle function. The following uses an example for description.

In some embodiments, the real-vehicle interactive display of the vehicle function is performed when the function parameter does not include a parameter for performing the driving operation by the vehicle. In some embodiments, the driving operation performed by the vehicle includes an operation that changes the driving status of the vehicle, such as operating the steering mechanism, the power mechanism, the braking mechanism, or a gear. When the function parameter does not include the parameter for performing the driving operation by the vehicle, it usually indicates that execution of the vehicle function basically does not affect a current driving status (such as a parked state or an autonomous driving state) of the vehicle. Therefore, the execution of the vehicle function basically does not affect driving safety, and the vehicle function may be displayed through the real-vehicle interactive display.

In some embodiments, the real-vehicle interactive display of the vehicle function is performed when the function parameter includes the parameter for performing the driving operation by the vehicle and the environment parameter meets a safety condition for executing the vehicle function. For example, an environment parameter needed by a vehicle function is that there is no obstacle in a parking lot and within a preset distance of the vehicle. When the environment parameter is met, it may be determined that the environment parameter meets the safety condition for executing the vehicle function, and the vehicle function may be displayed through the real-vehicle interactive display.

In some embodiments, the simulated interactive display of the vehicle function is performed when the function parameter includes the parameter for performing the driving operation by the vehicle and the environment parameter does not meet a safety condition for executing the vehicle function. For example, an environment parameter needed by a vehicle function is that there is no obstacle in a parking lot and within a preset distance of the vehicle. When the environment parameter is not met, for example, it is detected that there is an obstacle in the preset distance of the vehicle, or the vehicle is not in the parking lot, the vehicle function may be displayed through the simulated interactive display.

It can be learned from the foregoing examples that, in this embodiment of this application, the real-vehicle interactive display is used when the execution of the vehicle function meets the safety condition for vehicle driving. The simulated interactive display is used when the execution of the vehicle function does not meet the safety condition for vehicle driving. In this way, in a safe driving condition, the user obtains actual experience of the vehicle function through the real-vehicle interactive display through an actual operation, thereby obtaining better experience effect on the vehicle function, and ensuring driving safety in a display process of the vehicle function. The simulated interactive display is used when the real-vehicle interactive display is not suitable, so that the user can also understand the vehicle function through an actual operation, thereby improving learning experience of using the vehicle function, and ensuring driving safety in the display process of the vehicle function.

In some embodiments, the method further includes: when receiving a user indication for displaying the vehicle function, obtaining program code needed for executing the vehicle function, and loading the program code.

In some embodiments, when a to-be-displayed vehicle function is pushed, program code needed by the vehicle function may not be downloaded temporarily, and only an entry of the to-be-displayed vehicle function is displayed. When receiving a user indication for displaying the vehicle function, a video stream for displaying the vehicle function may be first obtained, so that the user can first experience the vehicle function through the video stream. After the first experience of the user, when receiving the user indication for displaying the vehicle function, the program code needed for executing the vehicle function is obtained, and the obtained program code is loaded to the vehicle, to perform the human-computer interaction method.

In some other embodiments, when the human-computer interaction method in this application is performed, only basic program code for implementing a to-be-displayed vehicle function or program code for implementing simulated interaction may be downloaded. When receiving the user indication for displaying the vehicle function (for example, after the first experience of the user), complete program code needed for executing the vehicle function is obtained. An example is described below.

In an embodiment, when the human-computer interaction method provided in this embodiment of this application is performed, basic program code for implementing a vehicle function is downloaded and loaded to a vehicle-mounted apparatus of a vehicle. Program code related to a data calculation process is implemented on a cloud. The vehicle and the cloud coordinate to display the vehicle function. When a user indication for displaying the vehicle function is received, complete program code (for example, including the program code related to the data calculation process) is downloaded and loaded to the vehicle-mounted apparatus of the vehicle, so that the vehicle function can be independently implemented by the vehicle.

In another embodiment, when the human-computer interaction method provided in this embodiment of this application is performed, a vehicle obtains a simplified version of program code for implementing a vehicle function. The vehicle can implement the vehicle function by running the program code, but some parameters are not necessarily optimal (for example, the parameters related to vehicle driving stability and speed change smoothness). When receiving a user indication for displaying the vehicle function, the vehicle obtains complete program code of the vehicle function, and the complete version may include better parameters. In this way, the vehicle function is more desirable, and execution effect is better.

In the foregoing manners, when there are an increasingly large number of vehicle software functions, corresponding program code may be downloaded when the user needs a specific vehicle function, so that storage space and system resources of the vehicle can be saved.

In some embodiments, in step S20, that the pushing a to-be-displayed vehicle function includes: pushing the to-be-displayed vehicle function according to a push policy. The push policy herein is used to determine which vehicle function is to be pushed. For example, a vehicle function that has not been enabled by the user or that is enabled few times may be pushed, or a newly-added vehicle function after a vehicle software system is upgraded may be pushed, or a function that is presumed to be not known to the user.

In some embodiments, the push policy may include: pushing the vehicle function when a quantity of times the vehicle function is pushed is less than a preset value; or/and pushing the vehicle function when a quantity of times the vehicle function is executed is less than a preset value. It is considered in such a push policy that if a vehicle function is pushed a relatively small quantity of times, it is difficult for the user to fully understand how to use the function. Similarly, if a vehicle function is executed a relatively small quantity of times, the user may not be familiar with how to use the function. Therefore, a vehicle function with a relatively small quantity of push times and/or a relatively small quantity of execution times may be preferentially displayed according to the push policy, so that the user gets familiar with how to use the function as soon as possible. In this embodiment of this application, a preset value of the quantity of times may be preset. For example, it may be preset that the vehicle function is pushed when the quantity of times the vehicle function is pushed or the quantity of times the vehicle function is executed or both the quantity of times the vehicle function is pushed and the quantity of times the vehicle function is executed are less than 5.

In some embodiments, the push policy may further include: preferentially pushing an advanced vehicle function, and a key function or a new function of a product. It is considered in such a push policy that, from the perspective of a vehicle seller or a vehicle function developer, an increasingly large number of vehicle software functions are provided, and many highlight functions or new functions are not known and used by the user. The push policy is used, so that the user can know and experience these functions, and the user can be guided to develop a habit of using these functions, thereby achieving desired function promotion effect.

In some embodiments, the push policy may include: the vehicle function meets a use condition before parking of the vehicle and the vehicle function is not used.

In this embodiment, when a vehicle function meets the use condition before parking but is not used, a possible case is that the user does not know existence of the vehicle function or does not know how to use the function. Therefore, the vehicle function is pushed. An example is described below.

In an example, when a parking track before parking does not match an expected track, and the user does not use the automatic parking function, the automatic parking function may be pushed after parking.

In another example, when driving duration of the vehicle exceeds specified duration, if the user does not enable the fatigue reminding function, the fatigue reminding function may be pushed after parking.

In some embodiments, the vehicle function may be pushed after current parking and before the user leaves the vehicle. In some other embodiments, the vehicle function may be pushed when the vehicle is still in a parked state after the user gets on the vehicle next time.

It can be learned from the foregoing description that, the to-be-displayed vehicle function is pushed by using the push policy, so that the vehicle function can be pushed and displayed in a more targeted manner, and the pushed and displayed vehicle function can better match a potential requirement of the user.

In the process of performing real-vehicle interaction or simulated interactive display in step S40, the following step may be further included: exiting interactive display in response to an operation of the user.

In some embodiments, the interactive display may be exited when an operation of the user indicating exit is received, for example, a voice, a gesture, or a control that indicates an exit instruction is triggered.

In some embodiments, the interactive display may alternatively be exited when it is detected that an operation of the user does not match an operation guided by a displayed vehicle function. For example, when the fatigue reminding function is displayed (it is assumed that a parameter only needed is a facial image of a driver captured by using a camera), interactive display of the function is exited when it is detected that a steering wheel, an acceleration pedal, or a deceleration pedal is operated by the user. In this case, it may be understood that a current operation of the user is not in response to the interactive display of the vehicle function, but is driving manipulation performed by the user based on an actual road condition. Therefore, the vehicle function display is exited in response to the driving operation of the user, so that the driving operation of the user is not affected.

In some embodiments, to more clearly distinguish whether an operation of the user is an operation guided by the vehicle function in the interactive display or a driving operation performed by the user based on the actual road condition, a trigger condition for exiting the interactive display may alternatively be: the vehicle function display is exited when it is determined that a quantity of consecutive user operations (for example, three or five consecutive user operations) or a user operation within a specified duration (for example, five seconds or 10 seconds) does not match the operation guided by the displayed vehicle function.

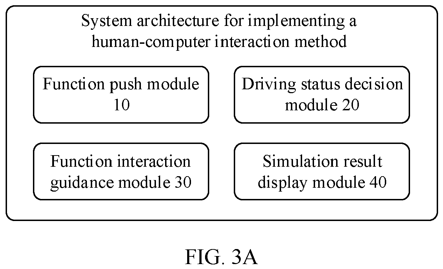

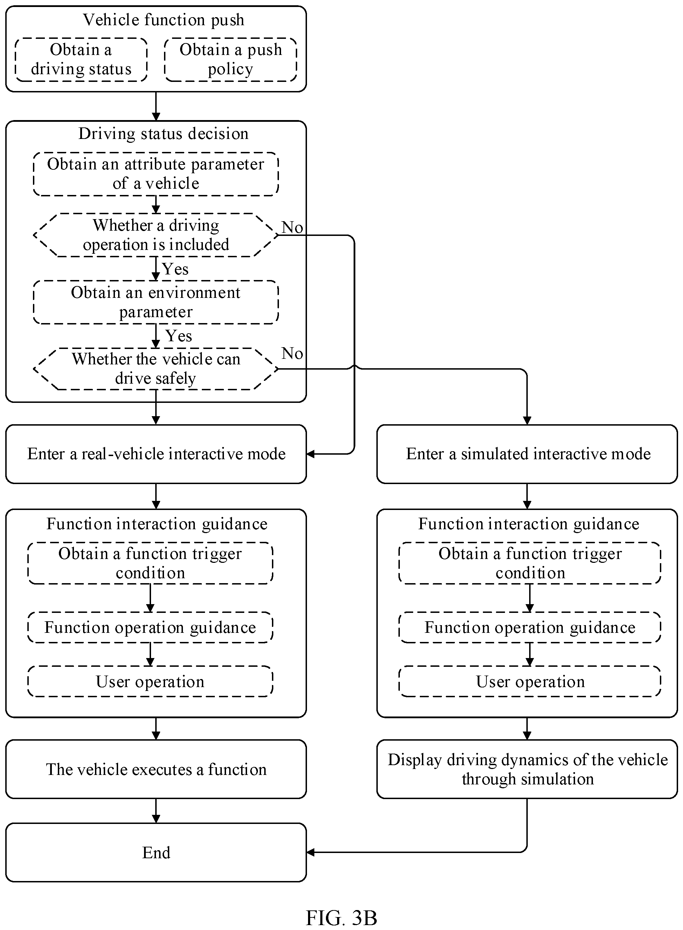

FIG. 3A is a diagram of a system architecture for implementing the human-computer interaction method according to an embodiment of this application. FIG. 3B is a diagram of a working principle of the system framework. As shown in FIG. 3A, the system architecture for implementing this embodiment of this application may include a function push module 10, a driving status decision module 20, a function interaction guidance module 30, and a simulation result display module 40. In some embodiments, the system architecture may be disposed on a vehicle-mounted apparatus of a vehicle. As described above, the vehicle-mounted apparatus may be an in-vehicle infotainment, an on-board computer, an in-vehicle chip, or the like. The foregoing modules are described below with reference to FIG. 3B.

The function push module 10 is configured to: obtain a driving status of a vehicle, determine a to-be-displayed vehicle function according to a push policy, and push the vehicle function. In some embodiments, the function push module 10 may be configured to implement step S10 and step S20 and each optional embodiment thereof.

For example, when obtaining that a vehicle is in a parked state, if it is determined that the state meets a vehicle function push condition, the function push module 10 may trigger pushing of a specific vehicle function according to a push policy.

The driving status decision module 20 is configured to: obtain, based on a to-be-displayed vehicle function, a function parameter and an environment parameter that are needed for executing the vehicle function, and based on the function parameter and the environment parameter, determine whether to perform real-vehicle interactive display or simulated interactive display. In some embodiments, the driving status decision module 20 may be configured to implement step S30 and step S40 and each optional embodiment thereof.

For example, the driving status decision module 20 obtains, from a function service module corresponding to a pushed vehicle function, a function parameter related to execution of the vehicle function, and determines, based on the function parameter of the vehicle, whether the execution of the vehicle function includes a driving operation.

In a case, when determining that the vehicle function executed by the vehicle does not relate to the driving operation, the driving status decision module 20 decides to enter a real-vehicle interactive mode.

In another case, when determining that the vehicle function executed by the vehicle includes the driving operation, the driving status decision module 20 further obtains the environment parameter like location information or surrounding environment information, to further determine whether the environment parameter meets a safety condition for executing the vehicle function, that is, determines whether it is safe for the vehicle to execute the vehicle function in this environment. If the safety condition is met, the driving status decision module 20 determines to enter the real-vehicle interactive mode; or if the safety condition is not met, the driving status decision module 20 determines to enter a simulated interactive mode.

In the real-vehicle interactive mode, the function service module of the vehicle guides an operation of a user, and may execute a service logic of the vehicle function in response to the operation of the user, to implement the vehicle function. In the simulated interactive mode, the function service module of the vehicle guides an operation of a user, but does not control the vehicle to execute the vehicle function, and displays the vehicle function through multimedia.

The function interaction guidance module 30 is configured to: obtain trigger condition information of a series of steps from the function service module of the vehicle, and guide, through a voice and a graphical interface, a user to perform a series of operations, to implement interactive guidance in a process of real-vehicle interactive display or simulated interactive display of a vehicle function.

The simulation result display module 40 is configured to display, in a simulated interactive mode based on an operation performed by a user on a vehicle, a driving status of the vehicle under the operation through multimedia, for example, display a dynamic driving status of the vehicle on a central control screen through simulation.

To further understand the human-computer interaction method provided in this embodiment of this application, with reference to the system framework shown in FIG. 3A and FIG. 3B, the following further describes this application by using an example in FIG. 4A-1 and FIG. 4A-2 in which the human-computer interaction method is applied to displaying of an automatic parking function. The method shown in this embodiment may be performed by a vehicle-mounted apparatus of a vehicle, and may specifically include the following steps S110 to S150.

S110: A function push module pops up a recommendation message of the automatic parking function on a central control screen of the vehicle according to a push policy.

In this embodiment, a push policy of the automatic parking function may include: a driving status of the vehicle is a parked state and the automatic parking function is not used. When determining that the driving status of the current vehicle is the parked state and the vehicle function is not used, the function push module pops up the recommendation message of the automatic parking function through the central control screen.

In some other embodiments, when a plurality of vehicle functions are obtained through matching, a recommendation message including the plurality of vehicle functions may be displayed on the central control screen.

S120: Receive an operation of a user. In this embodiment, the received operation is an operation in which the user taps a confirmation control in the function recommendation message.

In some other embodiments, when the recommendation message including the plurality of vehicle functions is displayed on the central control screen, the user may tap one of the vehicle functions.

In addition, the function recommendation message may further include an exit control. The user may reject current interactive display of a vehicle function, or when the user does not confirm current interactive display of a vehicle function within specified duration, it indicates that the user rejects the current interactive display of the vehicle function, and the process exits.

S130: The driving status decision module obtains a function parameter related to the automatic parking function from a function service module, obtains an environment parameter collected by the vehicle, and determines, based on a driving safety priority condition, that the vehicle enters a simulated interactive display mode. This step may include the following steps S131 to S138.

S131: A driving status decision module sends, to the function service module, a request for obtaining the function parameter related to the automatic parking function. In this embodiment, the function parameter includes an output parameter of the vehicle function.

S132: The function service module returns the corresponding output parameter. In this embodiment, the output parameter includes a signal of a controller area network (Controller Area Network, CAN) bus of the vehicle.

S133: The driving status decision module determines, based on the CAN signal, a driving operation related to the automatic parking function.

In this embodiment, the CAN signal includes data indicating that destination data or source data is a steering mechanism, a power mechanism, or a braking mechanism, and it may be determined that the output parameter is related to the driving operation accordingly.

S134: The driving status decision module obtains the environment parameter like location information or a surrounding environment of the vehicle.

The foregoing information may be obtained from a corresponding sensor or another controller of the vehicle through the CAN bus of the vehicle.

S135: The driving status decision module analyzes the environment parameter like the vehicle location or a distance between the vehicle and a surrounding obstacle, and determines whether the vehicle can drive safely when the automatic parking function is executed. In this embodiment, if it is determined that the vehicle cannot drive safely, the driving status decision module determines to use a simulated interactive mode, and performs a next step.

If it is determined that the vehicle can drive safely, the driving status decision module determines to use a real-vehicle interactive mode.

S136 and S137: The driving status decision module controls the vehicle to enter the simulated interactive display mode.

In this embodiment, an indication message is sent to a power system of the vehicle through the CAN bus, to indicate the vehicle to enter an operable and non-driving mode. To be specific, after a driving operation of the user is received, a corresponding power system (including steering, power, and braking) does not respond to the driving operation of the user.

S138: The driving status decision module sends an indication message to a function guidance module, to indicate the function guidance module to enter a guidance process of the vehicle function in the simulated interactive display mode.

S140 and S141: The function guidance module obtains steps of the automatic parking function from the function service module, to perform guided interaction of the vehicle function.

S150: The function guidance module performs guided interaction of the automatic parking function displayed in the simulated interactive mode, including a series of operations for guiding the user, and sends information about series of operation of the user to a simulation result display module. The simulation result display module displays a series of actions of a simulated vehicle in animation based on the series of operations of the user. The series of actions are in response to the series of operations of the user, and form a driving track of the simulated vehicle.

For example, the following steps S1511 to S1516 are an example of controlling the vehicle to an expected position during displaying the automatic parking function in the simulated interactive mode, to implement preparation work before automatic parking. Steps S1521 to S1526 are an example in which the vehicle automatically drives into a parking space during displaying the automatic parking function in the simulated interactive mode.

S 1511: The function guidance module pops up a guidance interface on the central control screen to provide operation guidance for the user, including guidance through a voice and a graphical interface. For example, this step may include: guiding the user to find a switch control of the automatic parking function in a menu that is displayed on the central control screen.

S1512: The user turns on the switch control of the automatic parking function based on the guidance. A related signal generated by this operation is sent to the function guidance module.

S1513: In response to the received signal in the previous step, the function guidance module pops up a guidance interface of a next step. For example, the guidance interface popped up in this step may be guiding the user to switch a gear to a drive gear (or referred to as D gear), and keep driving at a low speed.

S1514: The user switches or keeps the gear in the drive gear based on the guidance, and steps on an acceleration pedal. A related vehicle operation signal generated by this operation, such as a gear signal or an acceleration pedal stroke signal, is sent to the function guidance module.

S1515: In response to the vehicle operation signal received in the previous step, the function guidance module delivers the vehicle operation signal to the simulation result display module, so that the simulation result display module simulates control of the vehicle to a the desired position based on the vehicle operation signal, to complete the preparation work of the automatic parking.

The simulation result display module may implement simulation in the following manner: A virtual vehicle is displayed on a display interface of the central control screen, where in response to the vehicle operation of the user, the virtual vehicle drives at a low speed in a scenario displayed on the display interface, to drive to the desired position before parking. The scenario displayed on the display interface is a virtual scenario, and may include a picture that includes a parking space, or the like. In addition, the display scenario including the virtual vehicle may be displayed in step S1511. As shown in FIG. 4B, two frames of images corresponding to F1 and F2 respectively show diagrams in which the virtual vehicle in the virtual scenario is at an original position and at the desired position before parking.

S1516: After the work before parking is completed, for example, one or more cycles of steps S1511 to S1515 are performed, the virtual vehicle drives to the desired position before parking. In this case, the virtual scenario displayed on the interface displays a picture including the parking space, the virtual vehicle at a specific position outside the parking space, and the like.

S1521: After the preparation work before parking is completed, the function guidance module continues to guide, through the guidance interface, the user to step on a braking pedal and simultaneously tap a parking start control. In this embodiment, two conditions, that is, stepping on the braking pedal and simultaneously tapping the parking start control, are used as a trigger operation for taking over the vehicle to perform automatic parking.

S1522: The user steps on the braking pedal based on the guidance, and taps the parking start control. A related signal generated by this operation is sent to the function guidance module.

S1523: In response to the received signal in the previous step, the function guidance module pops up a guidance interface of a next step. For example, the guidance interface popped up in this step may be guiding to release the braking pedal and a steering wheel.

S1524: The user releases the braking pedal and the steering wheel based on the guidance. A vehicle operation signal generated by this operation is sent to the function guidance module.

S1525: In response to the vehicle operation signal received in the previous step, the function guidance module delivers the vehicle operation signal to the simulation result display module, so that the simulation result display module starts to display an automatic parking process through simulation based on the signal.

S1526: After receiving the vehicle operation signal, the simulation result display module displays, on the interface of the central control screen, a process of automatically driving the virtual vehicle into the parking space in the virtual scenario, that is, displays, through simulation, a dynamic process of automatically parking the vehicle. As shown in FIG. 4B, two frames of images corresponding to F3 and F4 show two diagrams of the automatic parking process.

To further understand the human-computer interaction method provided in this embodiment of this application, with reference to the system framework shown in FIG. 3A and FIG. 3B, the following further describes this application by using an example FIG. 5 in which the human-computer interaction method is applied to displaying of a fatigue reminding function. The method shown in this embodiment may be performed by a vehicle-mounted apparatus of a vehicle, and may specifically include the following steps S210 to S250.

S210: A function push module pops up a recommendation message of the fatigue reminding function on a central control screen of the vehicle according to a push policy.

In this embodiment, the push policy of the fatigue reminding function may include: when it is detected that a previous continuous driving time of the vehicle exceeds specified duration for two hours, and the fatigue reminding function is not enabled in a previous driving process of the vehicle, and the vehicle is started but is still in a parked state at this time, pushing the fatigue reminding function.

In some other embodiments, the fatigue reminding function may alternatively be pushed based on the policy described in step S110.

S220: Receive an operation of a user. In this embodiment, the received operation is an operation in which the user taps a confirmation control in the function recommendation message.

S230: A driving status decision module obtains a function parameter of the fatigue reminding function from a function service, determines, based on the parameter, that execution of the function does not relate to a driving operation of the user, and determines that the vehicle enters a real-vehicle interactive display mode. This step may include the following steps S231 to S234.

S231 and S232: The driving status decision module sends, to the function service module, a request for obtaining the function parameter of the fatigue reminding function, and the function service module returns a corresponding output parameter that includes a signal of a CAN bus of the vehicle.

S233: The driving status decision module determines, based on the CAN signal, that the fatigue reminding function does not require the driving operation, and determines to use the real-vehicle interactive mode.

S234: The driving status decision module controls the vehicle to enter the real-vehicle interactive display mode, and sends an instruction message to the function guidance module, to indicate the function guidance module to enter guidance of the fatigue reminding function, that is, perform the guidance in the real-vehicle interactive display mode.

S240 and S241: The function guidance module obtains steps of the fatigue reminding function from the function service module, to perform guided interaction of the vehicle function.

S250: The function guidance module performs the guided interaction of the fatigue reminding function displayed in the real-vehicle interactive mode. This step may include the following steps S251 to S254.

S251: The function guidance module pops up a guidance interface on the central control screen to provide operation guidance for the user, including guidance through a voice and a graphical interface. In this embodiment, the user is guided to perform an action of yawning.

S252: The user performs the action of yawning based on the guidance. The action is captured by a sensor of the vehicle (for example, a camera in an intelligent cockpit), and when the action is identified, a related signal generated is sent to the function guidance module.

S253 and S254: In response to the received signal in the previous step, the function guidance module executes service logic of the fatigue reminding function, and provides a corresponding safety reminder based on the service logic through the central control screen or the voice.

As shown in FIG. 6, an embodiment of this application further provides a human-computer interaction apparatus correspondingly. For beneficial effects or resolved technical problems of the apparatus, refer to the descriptions in the human-computer interaction method corresponding to the apparatus, or refer to the descriptions in the summary. Only brief description is provided herein. The human-computer interaction apparatus in this embodiment may be configured to implement the human-computer interaction method and each optional embodiment of the method. As shown in FIG. 6, the human-computer interaction apparatus 100 includes an obtaining module 110, a push module 120, and a display module 130.

The obtaining module 110 is configured to obtain a driving status of a vehicle. Specifically, the obtaining module 110 may be configured to perform step S10 in the human-computer interaction method and the examples in step S10.

The push module 120 is configured to push a to-be-displayed vehicle function when the driving status meets a vehicle function push condition. Specifically, the push module 120 may be configured to perform step S20 in the human-computer interaction method and the examples in step S20.

The obtaining module 110 is further configured to: when receiving a user indication for displaying the vehicle function, obtain a function parameter and an environment parameter that are needed for executing the vehicle function. Specifically, the obtaining module 110 may be configured to perform step S30 in the human-computer interaction method and the examples in step S30.

The display module 130 is configured to perform real-vehicle interactive display or simulated interactive display of the vehicle function based on the function parameter and the environment parameter. Specifically, the display module 130 may be configured to perform step S40 in the human-computer interaction method and the examples in step S40.

In some embodiments, the vehicle function push condition includes: the vehicle is in a parked state.

In some embodiments, the display module 130 is configured to perform the real-vehicle interactive display of the vehicle function when the function parameter does not include a parameter for performing the driving operation by the vehicle.

In some embodiments, the display module 130 is configured to perform the real-vehicle interactive display of the vehicle function when the function parameter includes the parameter for performing the driving operation by the vehicle and the environment parameter meets a safety condition for executing the vehicle function.

In some embodiments, the display module 130 is configured to perform the simulated interactive display of the vehicle function when the function parameter includes the parameter for performing the driving operation by the vehicle and the environment parameter does not meet a safety condition for executing the vehicle function.

In some embodiments, the apparatus further includes a loading module. The loading module is configured to: when receiving a user indication for displaying the vehicle function, obtain program code needed for executing the vehicle function, and load the program code.

In some embodiments, the push module 120 is further configured to push the to-be-displayed vehicle function according to a push policy.

In some embodiments, when the push module 120 pushes the to-be-displayed vehicle function according to the push policy, one or two of the following operations are included: pushing the vehicle function when a quantity of times the vehicle function is pushed is less than a preset value; or pushing the vehicle function when a quantity of times the vehicle function is executed is less than a preset value.

In some embodiments, the push module 120 is configured to push the vehicle function when the vehicle function meets a use condition before parking of the vehicle and the vehicle function is not used.

It should be understood that the human-computer interaction apparatus 100 in this embodiment of this application may be implemented by software, for example, implemented by a computer program or instructions that have the foregoing functions. The corresponding computer program or instructions may be stored in a memory inside a terminal, and a processor reads the corresponding computer program or instructions in the memory to implement the foregoing functions. Alternatively, the human-computer interaction apparatus 100 in this embodiment of this application may be implemented by hardware. For example, the obtaining module 110 of the human-computer interaction apparatus 100 may be implemented by a sensor on the vehicle, or the obtaining module 110 may be implemented by an interface circuit between a processor and a sensor on the vehicle. The push module 120 and the display module 130 of the human-computer interaction apparatus 100 may be implemented by a multimedia apparatus on the vehicle, for example, an in-vehicle multimedia apparatus like an in-vehicle infotainment or an on-board computer. Alternatively, the push module 120 and the display module 130 may be implemented by a terminal like a mobile phone or a tablet. Alternatively, the human-computer interaction apparatus 100 in this embodiment of this application may be implemented through combination of the processor and a software module.

It should be understood that for processing details of the apparatus or the module in this embodiment of this application, refer to related descriptions of the embodiments shown in FIG. 2 to FIG. 5 and each optional embodiment thereof. Details are not described herein.

In addition, an embodiment of this application further provides a vehicle provided with the foregoing human-computer interaction apparatus. The vehicle may be the means of transportation in a broad sense, for example, a means of land transportation, a means of water transportation, or a means of air transportation. The modules of the human-computer interaction apparatus may be pre-installed or post-installed in the vehicle. The modules may exchange data depending on a bus or an interface circuit of the vehicle. Alternatively, with development of wireless technologies, the modules may exchange data through wireless communication, to avoid inconvenience caused by cabling.

An embodiment of this application further provides an electronic apparatus, including a processor and a memory. The memory stores program instructions, and when the program instructions are executed by the processor, the processor is enabled to perform the methods in the embodiments corresponding to FIG. 2 to FIG. 5, or each optional embodiment thereof. FIG. 7 is a diagram of a structure of an electronic apparatus 600 according to an embodiment of this application. The electronic apparatus 600 includes a processor 610 and a memory 620.

It should be understood that the electronic apparatus 600 shown in FIG. 7 may further include a communication interface 630 that may be configured to communicate with another device.

The processor 610 may be connected to the memory 620. The memory 620 may be configured to store program code and data. Therefore, the memory 620 may be a storage unit in the processor 610, an external storage unit independent of the processor 610, or a component including the storage unit in the processor 610 and the external storage unit independent of the processor 610.

Optionally, the electronic apparatus 600 may further include a bus. The memory 620 and the communication interface 630 may be connected to the processor 610 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that in this embodiment of this application, the processor 610 may be a central processing unit (central processing unit, CPU). The processor may alternatively be another general-purpose processor, a digital signal processor (digital signal processor, DSP), an application-specific integrated circuit (Application-specific integrated circuit, ASIC), a field programmable gate array (field programmable gate Array, FPGA) or another programmable logic device, a discrete gate or transistor logic device, a discrete hardware component, or the like. The general-purpose processor may be a microprocessor, or the processor may be any conventional processor or the like. Alternatively, the processor 610 uses one or more integrated circuits, and is configured to execute a related program, to implement the technical solutions provided in this embodiment of this application.

The memory 620 may include a read-only memory and a random access memory, and provide instructions and data to the processor 610. A part of the processor 610 may further include a nonvolatile random access memory. For example, the processor 610 may further store information about a device type.

When the electronic apparatus 600 runs, the processor 610 executes computer-executable instructions in the memory 620 to perform the operation steps of the foregoing human-computer interaction method, for example, to perform the methods in the embodiments corresponding to FIG. 2 to FIG. 5, or each optional embodiment thereof.

It should be understood that the electronic apparatus 600 according to this embodiment of this application may correspond to a corresponding execution body of the methods in embodiments of this application, and the foregoing and other operations and/or functions of the modules in the electronic apparatus 600 are separately intended to implement corresponding procedures of the methods in embodiments. For brevity, details are not described herein.

An embodiment of this application further provides another electronic apparatus. FIG. 8 is a diagram of a structure of another electronic apparatus 700 according to this embodiment including a processor 710 and an interface circuit 720. The processor 710 accesses a memory through the interface circuit 720. The memory stores program instructions. When the program instructions are executed by the processor, the processor is enabled to perform the methods in the embodiments corresponding to FIG. 2 to FIG. 5 or each optional embodiment thereof. In addition, the electronic apparatus may further include a communication interface, a bus, and the like. For details, refer to the descriptions of the embodiment shown in FIG. 7. Details are not described.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When being executed by a processor, the program is used to perform the human-computer interaction method. The method includes at least one of the solutions described in the foregoing embodiments.

The computer storage medium in this embodiment of this application may be any combination of one or more computer-readable media. The computer-readable medium may be a computer-readable signal medium or a computer-readable storage medium. The computer-readable storage medium may be, but is not limited to, an electrical, magnetic, optical, electromagnetic, infrared, or semiconductor system, apparatus, or device, or any combination thereof. A more specific example (non-exhaustive list) of the computer-readable storage medium includes: an electrically connected or portable computer disk with one or more wires, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In this specification, the computer-readable storage medium may be any tangible medium that includes or stores a program, and the program may be used by or used in combination with an instruction execution system, apparatus, or device.

The computer-readable signal medium may include a data signal propagated in a baseband or propagated as part of a carrier, where the data signal carries computer-readable program code. The data signal propagated in this manner may be in a plurality of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit a program used by or used in combination with the instruction execution system, apparatus, or device.

The program code included in the computer-readable medium may be transmitted by using any appropriate medium, including but not limited to a wireless medium, an electric wire, an optical cable, RF, or any suitable combination thereof.

Computer program code for performing the operations in this application may be written in one or more programming languages or a combination thereof. The programming languages include object-oriented programming languages-such as Java, Smalltalk, and C++, and further include conventional process programming languages-such as a "C" language or a similar programming language. The program code may be completely executed on a user computer, partially executed on a user computer, executed as an independent software package, partially executed on a user computer and partially executed on a remote computer, or completely executed on a remote computer or server. In a case in which a remote computer is used, the remote computer may be connected to a user computer through any type of network, including a local area network (LAN) or a wide area network (WAN); or may be connected to an external computer (for example, through the Internet provided by an Internet service provider).

In this specification and claims, the terms such as "first, second, third, and the like" or similar terms such as a module A, a module B, and a module C are merely used to distinguish between similar objects, and do not represent a specific order of the objects. It may be understood that specific orders or sequences may be exchanged if permitted, so that embodiments of this application described herein may be implemented in an order other than the order illustrated or described herein.

In the foregoing descriptions, the reference numerals of steps such as S10, S20, and the like do not necessarily indicate that the steps are performed based on the sequence, and consecutive steps may be transposed if allowed, or may be performed simultaneously.

The term "include" used in the specification and claims should not be construed as being limited to the content listed below; and the term does not exclude other elements or steps. Accordingly, it should be interpreted as specifying the presence of the feature, whole, step or component mentioned, but does not preclude the presence or addition of one or more other features, wholes, steps or components and groups thereof. Therefore, the expression "a device including an apparatus A and an apparatus B" should not be limited to a device including only the components A and B.

"One embodiment" or "an embodiment" mentioned in this specification means that a specific feature, structure, or characteristic described in combination with this embodiment is included in at least one embodiment of this application. Therefore, the expression "in one embodiment" or "in an embodiment" appearing throughout this specification does not necessarily indicate a same embodiment, but may indicate a same embodiment. Further, in one or more embodiments, the particular feature, structure, or characteristics can be combined in any proper manner, as is apparent to a person of ordinary skill in the art from the present disclosure.

It should be noted that the foregoing are merely example embodiments and applied technical principles of this application. A person skilled in the art may understand that this application is not limited to the specific embodiments described herein, and a person skilled in the art can make various obvious changes, readjustments, and replacements without departing from the protection scope of this application. Therefore, although this application is described in detail through the foregoing embodiments, this application is not limited to the foregoing embodiments, and may further include more other equivalent embodiments without departing from the concept of this application. All of the embodiments fall within the protection scope of this application.

## Claims

1. A human-computer interaction method, comprising:
obtaining a driving status of a vehicle;
pushing a to-be-displayed vehicle function when the driving status meets a vehicle function push condition;
when receiving a user indication for displaying the vehicle function, obtaining a function parameter and an environment parameter that are needed for executing the vehicle function; and
performing real-vehicle interactive display or simulated interactive display of the vehicle function based on the function parameter and the environment parameter.

2. The method according to claim 1, wherein the vehicle function push condition comprises: the vehicle is in a parked state.

3. The method according to claim 1 or 2, wherein the performing real-vehicle interactive display or simulated interactive display of the vehicle function based on the function parameter and the environment parameter comprises:
performing the real-vehicle interactive display of the vehicle function when the function parameter does not comprise a parameter for performing a driving operation by the vehicle.

4. The method according to claim 1 or 2, wherein the performing real-vehicle interactive display or simulated interactive display of the vehicle function based on the function parameter and the environment parameter comprises:
performing the real-vehicle interactive display of the vehicle function when the function parameter comprises a parameter for performing a driving operation by the vehicle and the environment parameter meets a safety condition for executing the vehicle function.

5. The method according to claim 1 or 2, wherein the performing real-vehicle interactive display or simulated interactive display of the vehicle function based on the function parameter and the environment parameter comprises:
performing the simulated interactive display of the vehicle function when the function parameter comprises a parameter for performing a driving operation by the vehicle and the environment parameter does not meet a safety condition for executing the vehicle function.

6. The method according to any one of claims 1 to 5, further comprising:
when receiving the user indication for displaying the vehicle function, obtaining program code needed for executing the vehicle function; and
loading the program code.

7. The method according to any one of claims 1 to 6, wherein the pushing a to-be-displayed vehicle function comprises:
pushing the to-be-displayed vehicle function according to a push policy.

8. The method according to claim 7, wherein the pushing the to-be-displayed vehicle function according to a push policy comprises one or two of the following:
pushing the vehicle function when a quantity of times the vehicle function is pushed is less than a preset value; and
pushing the vehicle function when a quantity of times the vehicle function is executed is less than a preset value.

9. The method according to claim 7 or 8, wherein the pushing the to-be-displayed vehicle function according to a push policy comprises:
pushing the vehicle function when the vehicle function meets a use condition before parking of the vehicle and the vehicle function is not used.

10. A human-computer interaction apparatus, comprising:
an obtaining module, configured to obtain a driving status of a vehicle;
a push module, configured to push a to-be-displayed vehicle function when the driving status meets a vehicle function push condition, wherein
the obtaining module is further configured to: when receiving a user indication for displaying the vehicle function, obtain a function parameter and an environment parameter that are needed for executing the vehicle function; and
a display module, configured to perform real-vehicle interactive display or simulated interactive display of the vehicle function based on the function parameter and the environment parameter.

11. The apparatus according to claim 10, wherein the vehicle function push condition comprises: the vehicle is in a parked state.

12. The apparatus according to claim 10 or 11, wherein the display module is configured to:
perform the real-vehicle interactive display of the vehicle function when the function parameter does not comprise a parameter for performing a driving operation by the vehicle.

13. The apparatus according to claim 10 or 11, wherein the display module is configured to:
perform the real-vehicle interactive display of the vehicle function when the function parameter comprises a parameter for performing a driving operation by the vehicle and the environment parameter meets a safety condition for executing the vehicle function.

14. The apparatus according to claim 10 or 11, wherein the display module is configured to:
perform the simulated interactive display of the vehicle function when the function parameter comprises a parameter for performing a driving operation by the vehicle and the environment parameter does not meet a safety condition for executing the vehicle function.

15. The apparatus according to any one of claims 10 to 14, wherein the apparatus further comprises a loading module, wherein the loading module is configured to:
when receiving the user indication for obtaining the vehicle function, obtain program code needed for executing the vehicle function; and
load the program code.

16. The apparatus according to any one of claims 10 to 14, wherein the push module is further configured to:
push the to-be-displayed vehicle function according to a push policy.

17. The apparatus according to claim 16, wherein the push module is specifically configured to perform one or more of the following:
pushing the vehicle function when a quantity of times the vehicle function is pushed is less than a preset value; and
pushing the vehicle function when a quantity of times the vehicle function is executed is less than a preset value.

18. The apparatus according to any one of claims 16 or 17, wherein the push module is configured to:
push the vehicle function when the vehicle function meets a use condition before parking of the vehicle and the vehicle function is not used.

19. An electronic apparatus, comprising:
a processor; and
a memory, wherein the memory stores program instructions, and when the program instructions are executed by the processor, the processor is enabled to perform the human-computer interaction method according to any one of claims 1 to 9.

20. An electronic apparatus, comprising:
a processor and an interface circuit, wherein
the processor accesses a memory through the interface circuit, the memory stores program instructions, and when the program instructions are executed by the processor, the processor is enabled to perform the human-computer interaction method according to any one of claims 1 to 9.

21. A computer-readable storage medium, wherein the computer-readable storage medium stores program instructions, and when the program instructions are executed by a computer, the computer is enabled to perform the human-computer interaction method according to any one of claims 1 to 9.

22. A computer program product, wherein the computer program product comprises program instructions, and when the program instructions are executed by a computer, the computer is enabled to perform the human-computer interaction method according to any one of claims 1 to 9.
